# EUROPEAN PATENT APPLICATION

(11) **EP 1 843 426 A1**
(43) Date of publication of application: **10.10.2007**
(21) Application number: 06112361.8
(22) Date of filing: 07.04.2006
(51) Int. Cl.: H01M 10/40

(54) **Lithium rechargeable electrochemical cell**

(71) Applicant: High Power Lithium S.A., 1015 Lausanne (CH)
(72) Inventor: Exnar, Ivan, Dr., 4452, Itingen (CH); Wang, Qing, Dr., 1024, Ecublens (CH); Grätzel, Michael, 1025, St-Sulpice (CH)
(74) Representative: Grosfillier, Philippe

(57) **Abstract**

This invention concerns a lithium rechargeable electrochemical cell containing electrochemical redox active compounds in the electrolyte. The cell is composed of two compartments, where the cathodic compartment comprises a cathodic lithium insertion material and one or more of p-type redox active compound(s) in the electrolyte; the anodic compartment comprises an anodic lithium insertion material and one or more of n-type redox active compound(s) in the electrolyte. These two compartments are separated by a separator and the redox active compounds are confined only in each compartment. Such a rechargeable electrochemical cell is suitable for high energy density applications. The present invention also concerns the general use of redox active compounds and electrochemically addressable electrode systems containing similar components which are suitable for use in the electrochemical cell.

## Description

### FIELD OF THE INVENTION

This invention concerns electrochemically addressable lithium insertion electrode systems for electrochemical cells using non-aqueous organic electrolytes, quasi-solid gel electrolytes, solid electrolytes, or the like and in particular the use of said electrolytes in combination with porous electrode materials, i.e. doped or non-doped nanoparticles or sub-microparticles of lithium insertion materials and redox active compounds in the electrolyte.

The redox active compounds are dissolved in the electrolyte. Because those compounds do not occupy any extra volume of the whole electrode system, it provides excellent energy density of the electrochemical cell.

This invention also concerns the configuration of the electrochemical cell containing the redox active compounds.

### STATE OF THE ART

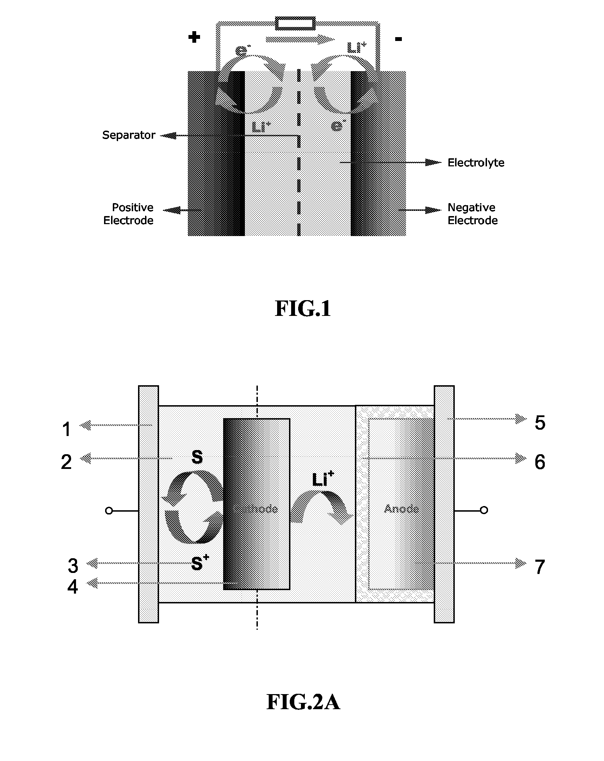

Electrochemical cells, as illustrated in FIG.1, have used lithium insertion materials by adding conductive additive, i.e. carbon black, carbon fiber, graphite, or mixture of them to improve the electronic conductivity of the electrode films.

The lithium insertion materials in commercial electrochemical cells comprise 2~25 wt. %, typically 10 wt. % conductive additives. These conductive agents do not participate in the redox reactions and therefore represent inert mass reducing the specific energy storage capacity of the electrode. This situation is especially severe as the lithium insertion material or its de-intercalated state has very poor electronic conductivity.

For instance, pioneering work by Padhi et al (J. Electrochem. Soc. 144, 1188 (1997*)*.) first demonstrated reversible extraction of Li from the olivine-structured LiFePO₄, however 25 wt.% acetylene black was added. This is also illustrated in JP 2000-294238 A2 wherein a LiFePO₄/Acetylene Black ratio of 70 /25 is used.

US Pat. No.6235182 and WO Pt. No. 9219092 disclose a method for coating insulators with carbon particles by substrate-induced coagulation. This method involves the adsorption of polyelectrolyte compound and subsequent coagulation of carbon particle on the substrate to form an adhesive carbon coating. For high quality carbon coating, the size of carbon particle is very dependent on the dimension of substrate and the amount of carbon used is still remarkable.

WO Pat. No.2004001881 discloses a new route for the synthesis of carbon-coated powders having the olivine or NASICON structure by mixing the precursors of carbon and said materials and subsequent calcinations. Nevertheless, it is still necessary to have 4~8 wt. % of coated carbon to exploit the invention fully.

### SUMMARY OF THE INVENTION

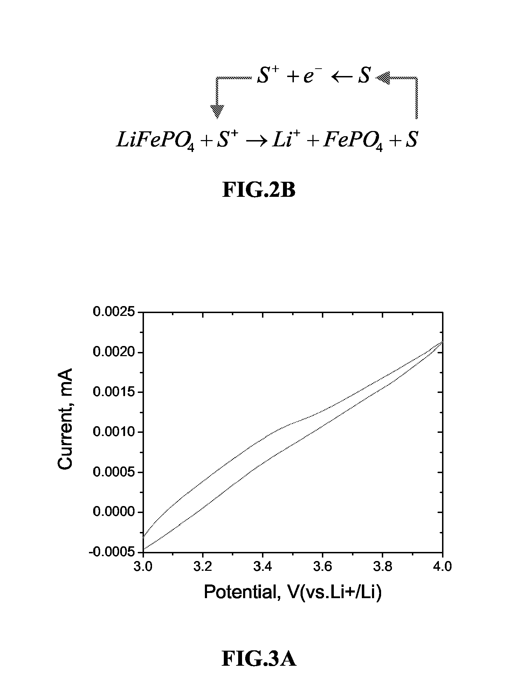

It has been discovered that the presence of some redox active compounds in the electrolyte forms an electrochemically addressable electrode system. As illustrated in FIG.2, for a cathodic lithium insertion material and a p-type redox active compound (S) dissolved in the electrolyte of cathodic compartment, upon positive polarization the p-type redox active compound will be oxidized at current corrector and charges (holes) will be transported from the current collector to the lithium insertion material by the diffusion of the oxidized p-type redox active compound (S+). As the redox potential of the p-type redox active compound is higher or matches closely the Fermi level of the lithium insertion material, S+ will be reduced by the lithium insertion material. Electrons and lithium ions will be withdrawn from it during battery charging. By contrast, during the discharging process, the oxidized species are reduced at current collector and charges (electrons) are transported from the current collector to the lithium insertion material by the diffusion of p-type redox active compound (S). Lithium ions and electrons are injected into the solid, as the redox potential of the p-type redox active compound is lower or matches closely the Fermi level of the lithium insertion material.

The cell is composed of two compartments, where the cathodic compartment comprises a cathodic lithium insertion material and p-type redox active compound(s) in the electrolyte; the anodic compartment comprises an anodic lithium insertion material and n-type redox active compound(s) in the electrolyte. These two compartments are separated by a separator and the redox active compounds are confined only in each compartment. Compared to the whole electrode system, the redox active compounds do not occupy any extra volume of the whole electrode system. Hence with respect to prior art, the present invention allows reducing greatly the volume of the conductive additives resulting in a much improved energy storage density.

It is therefore an object of the invention to provide a means to avoid or minimize the amount of the conductive additives required for the operation of an ion insertion battery. It is also an object of the invention to provide a rechargeable electrochemical cell having higher energy density.

### DEFINITIONS

As used herein, the term "lithium insertion material" refers to the material which can host and release lithium or other small ions such as Na⁺, Mg²⁺ reversibly. If the materials lose electrons upon charging, they are referred to as "cathodic lithium insertion material". If the materials acquire electrons upon charging, they are referred to as "anodic lithium insertion material".

As used herein, the term "p-type redox active compound" refers to those compounds that present in the electrolyte of cathodic compartment of the cell, and act as molecular shuttles transporting charges between current collector and cathodic lithium insertion material upon charging/discharging. On the other hand, the term "n-type redox active compound" refers to the molecules that present in the electrolyte of anodic compartment of the cell, and act as molecular shuttles transporting charges between current collector and anodic lithium insertion material upon charging/discharging.

### BRIEF DESCRIPTION OF THE DRAWINGS

The features and advantages of the invention are further set out in the following examples, illustrated by way of a non-limiting example with reference to the appended drawings in which:
**FIG.1** shows a schematic sectional view of the prior art rechargeable electrochemical cell during discharging process.
**FIG.2A** shows the schematic working principle of the electrochemical cell upon charging with p-type redox active compound in the cathodic compartment. 1: cathodic current collector; 2: electrolyte in cathodic compartment; 3: p-type redox active compound; 4: cathodic lithium insertion material; 5: anodic current collector; 6: separator; 7: anodic lithium insertion material.
**FIG.2B** reactions involved in the cathodic compartment of the cell upon charging.
**FIG.3A** shows cyclic voltammograms of bare LiFePO₄ electrode in ethylene carbonate (EC) + ethyl methyl carbonate (EMC)/ 1M LiPF₆ electrolyte. The counter and reference electrodes are lithium foils. The scan rate is 5mV/s.
**FIG.3B** shows cyclic voltammograms of LiFePO₄ electrode in the presence of 0.1 M MPTZ in EC+EMC/ 1M LiPF₆ electrolyte. The counter and reference electrodes are lithium foils. The scan rate is 5mV/s.
**FIG.3C** shows cyclic voltammograms of LiFePO₄ electrode in the presence of 4 mM Os(mobpy)₃Cl₂ and Os(mbpy)₃Cl₂ in EC+EMC / 1M LiPF₆ electrolyte. The counter and reference electrodes are lithium foils. The scan rates are indicated in the figure.
**FIG.4** shows the voltage profiles of LiFePO₄ electrode in the presence of 0.032 M Os(mobpy)₃Cl₂ and Os(mbpy)₃Cl₂ in EC+EMC / 1M LiPF₆ electrolyte. The current is 0.03 mA.

### DESCRIPTION OF ILLUSTRATIVE EMBODIMENTS

The following sections describe, in turn, the introduction of the concept, the relevant materials used in the electrode system, the configuration of the electrode system, and embodiment in an electrochemical cell. These are followed by descriptions of examples of the electrode system and the resultant electrochemical cell.

As illustrated in FIG.2A, a p-type redox active compound is dissolved in the electrolyte, which is confined in the cathodic compartment of the cell by a separator. Upon charging the cell, the p-type redox active compound will be oxidized at current corrector and charges (holes) will be transported from the current collector to the lithium insertion material by the diffusion of the oxidized p-type redox active compound (S+). This allows for electrochemical polarization of the whole particle network by the current collector even though the lithium insertion material is electronically insulating and no carbon additive is used to promote conduction. As the redox potential of the p-type redox active compound is higher or matches closely the potential of the lithium insertion material, S+ will be reduced by the lithium insertion material. Electrons and lithium ions will be withdrawn from it during battery charging as illustrated in FIG.2B. By contrast, during the discharging process, the oxidized species are reduced at current collector and charges (electrons) are transported from the current collector to the lithium insertion material by the diffusion of p-type redox active compound (S). Lithium ions and electrons are injected into the solid, as the redox potential of the p-type redox active compound is lower or matches closely the potential of the lithium insertion material. More specifically during the charging of the battery, electrons and lithium ions are withdrawn from the lithium insertion compound while during the discharge process they are reinserted into the same material. An analogous mechanism is operative during discharging or charging of a lithium insertion material functioning as anode, the n-type redox active compound conducting electrons in this case.

The relevant materials used in the cathodic electrode system comprise a cathodic lithium insertion material and a p-type redox active compound dissolved in the electrolyte of the cathodic compartment.

### Preferred cathodic lithium insertion materials used herein are:

Doped or non-doped oxides LiMO₂ where M is one or more elements selected from M=Co, Ni, Mn, Fe, W, V, LiV₃O₈ or mix of them; phosphor-olivines as LiMPO₄ where M is one or more elements selected from M= Fe, Co, Mn, Ni, VO, Cr and mix of them and spinels and mixed spinels as LiₓMn₂O₄ or Li₂CoₓFe_{y}Mn_{z}O₈, etc., nano- or sub-microparticles. The particle size ranges from 10 nm to 10 micrometer, preferably 10~1000 nm.

Preferred p-type redox active compounds have the following structure:

### Triarylamine derivatives (scheme 1)

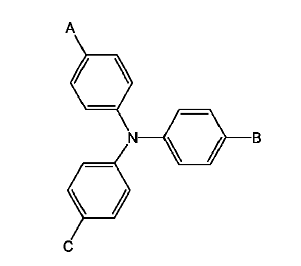

A, B, C can be
F or Cl or Br I or NO₂ or COOR or R or CF₃ or COR or OCH₃ or H
R= Alkyl (C₁ to C₂₀)

### Phenothiazine derivatives, carbazole derivatives (scheme 2)

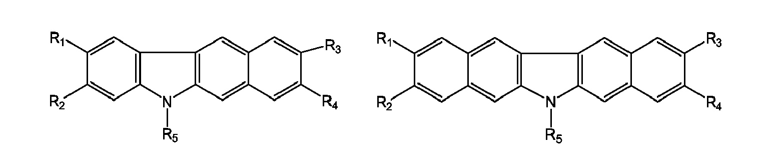

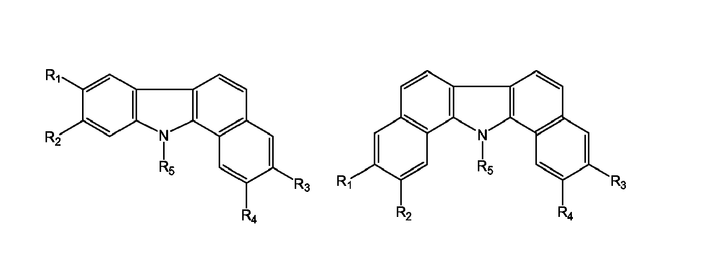

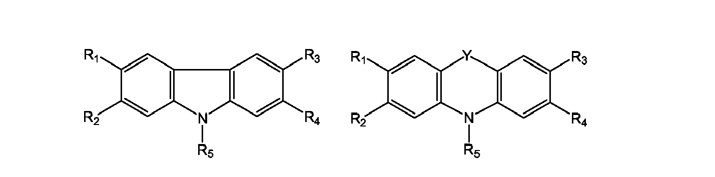

Y = N or O or S
R₁, R₂, R₃, R₄ can be
F or Cl or Br or I or NO₂ or COOR or Alkyl (C₁ to C₂₀) or CF₃ or COR or OR₅ or H R₅= Alkyl (C₁ to C₂₀) or H

### Transition metal complexes (scheme 3)

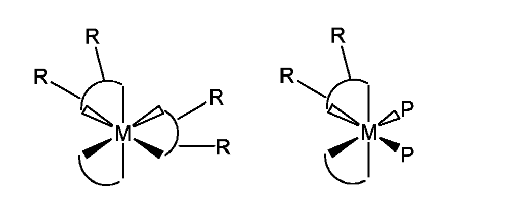

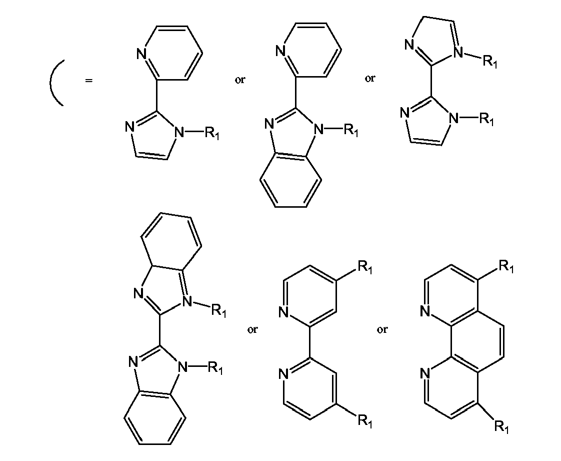

M= Fe or Ru or Os
n= 0 to 20
R₁= COOR' or COR' or CF₃ or OR' or NO₂ or F or Cl or Br or I or NR'₂ or R'
R'= alkyl (C₁ to C₂₀) or H
P= F or Cl or Br or I or NO₂ or CN or NCSe or NCS or NCO 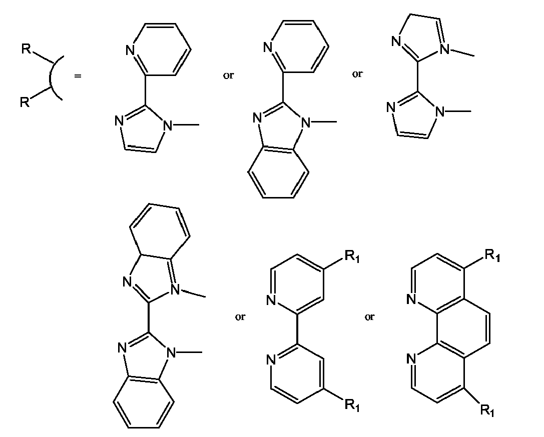 R₁= COOR or COR or CF₃ or OR' or NO₂ or F or Cl or Br or I or NR'₂ or R'
R'= alkyl (C₁ to C₂₀) or H 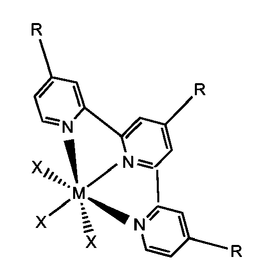 M= Fe or Ru or Os
X= F or Cl or Br or I or NO₂ or CN or NCSe or NCS or NCO
R= F or Cl or Br or I or NO₂ or COOR' or R' or CF₃ or COR' or OR' or NR'₂
R'= alkyl (C₁ to C₂₀) or H

### Radicals (scheme 4)

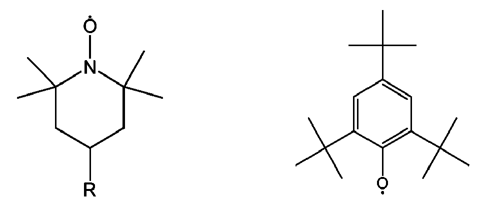

R= F or Cl or Br or I or NO₂ or COOR' or R' or CF₃ or COR' or OR' or NR'₂
R'= alkyl (C₁ to C₂₀) or H

### Others (scheme 5)

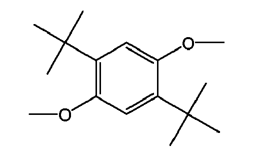

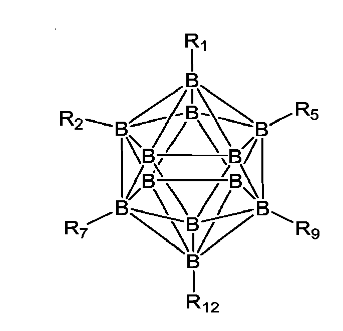

B₁₂R¹R²R³R⁴R⁵R⁶R⁷R⁸R⁹R¹⁰R¹¹R¹²
R¹, R², R³, R⁴, R⁵, R⁶, R⁷, R⁸, R⁹, R¹⁰, R¹¹, R¹² can be
R= F or Cl or Br or I or NO₂ or COOR' or R' or CF₃ or COR' or OR' or NR'₂
R'= alkyl (C₁ to C₂₀) or H

The relevant materials used in the anodic electrode system comprise an anodic lithium insertion material and an n-type redox active compound dissolved in the electrolyte of the anodic compartment.

### Preferred anodic lithium insertion materials used herein are:

Doped or non-doped TiO₂, SnO₂, SnO, Li₄Ti₅O₁₂ nano- or sub-microparticles. The particle size ranges from 10nm to 10 micrometer, preferably 10~500 nm.

### Preferred n-type redox active compounds have the following structure:

### Transition metal complexes (see above, scheme 3),

### Perylene derivatives (scheme 6),

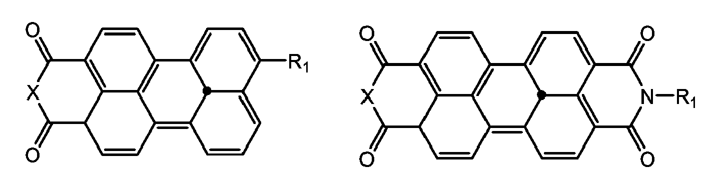

X=O or NCH2R
R1=H or C1 to C20 or 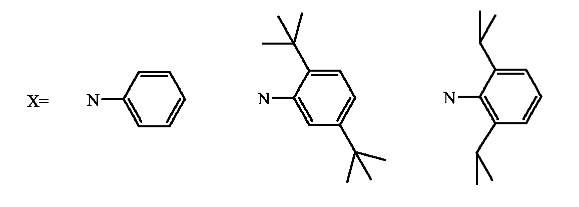 R1=NHCH2R
R= alkyl (C₁ to C₂₀) or H

The separator used herein can be solid electrolyte-last lithium ion conductor, such as Lithium Phosphorus Oxynitride (LiPON), 70Li₂S·30P₂S₅, etc. or ceramic nanofiltration membrane, which allows the transport of lithium ions through it, but prohibits the permeation of the redox active compounds.

In one embodiment of the invention, the rechargeable electrochemical cell comprises:
(a) A first electrode compartment comprising cathodic electrode, electrolyte with or without p-type redox active compound dissolved therein. The cathodic electrode comprises cathodic lithium insertion material, binder, conductive additives.
(b) A second electrode compartment comprising anodic electrode, electrolyte with or without n-type redox active compound dissolved therein. The anodic electrode comprises anodic lithium insertion material, binder, conductive additives.
(c) At least one of the electrode compartments with redox active compound dissolved therein.
(d) A separator intermediate the two electrode compartments.

In a preferred embodiment, the rechargeable electrochemical cell according to the invention comprises:
(a) A first electrode compartment comprising cathodic electrode, electrolyte with or without p-type redox active compound dissolved therein.
(b) A second counter electrode comprising binder, conductive additives, and anodic lithium insertion material such as carbon, TiO₂, Li₄Ti₅O₁₂, SnO₂, SnO, SnSb alloy, Si, etc.
(c) A separator intermediate the two electrode compartments.

In a particularly preferred embodiment of the rechargeable electrochemical cell of the present invention, the cathodic electrode comprising binder, conductive additives, and doped or non-doped LiMPO₄, wherein M=Fe, Mn, Co in first electrode compartment, having p-type redox active compound dissolved therein; and the second electrode comprising binder, conductive additives, and anodic lithium insertion material.
In this embodiment, the electronic conductivity of the cathodic lithium insertion materials is very poor, and the presence of p-type redox active compound makes the treated electrode system much more electrochemically addressable.

The invention is illustrated in the following EXAMPLES.

### EXAMPLE 1

LiFePO₄ powder with particle size distribution of 200~700nm was mixed with PVDF in weight ratio of 95:5. A 1.0cm×1.0cm electrode sheet comprising 10µm thick same was used as working electrode, with lithium foil as counter and reference electrodes for electrochemical test. The three electrodes were separated to three compartments by glass frits and filled with EC+DMC (1:1)/1M LiPF₆ electrolyte. In the LiFePO₄ electrode compartment, 0.1M MPTZ was dissolved therein.

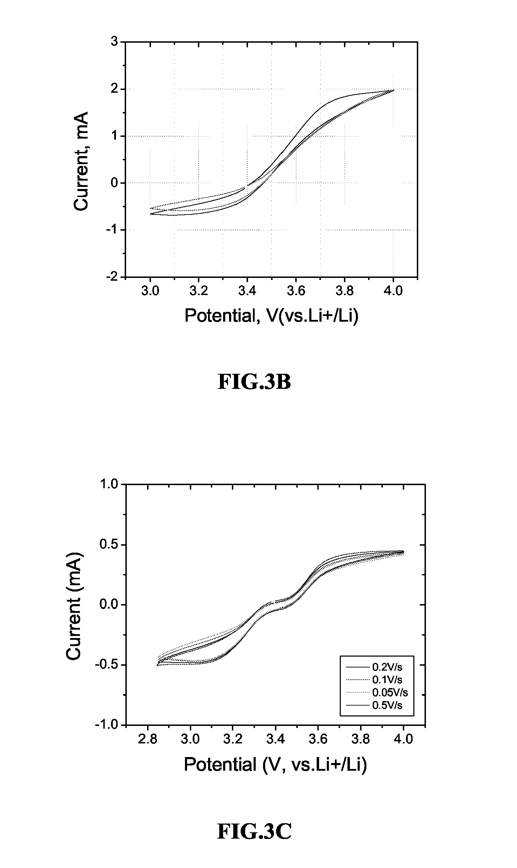

FIG.3B shows the cyclic voltammograms (CV) of the electrode system. Because the reaction in FIG. 2B is turned on at around 3.5V (vs. Li+/Li), MPTZ is oxidized at current collector and diffuse to LiFePO₄, where the oxidized MPTZ is reduced by LiFePO₄ since the local equilibrium potential of MPTZ is slightly higher than that of LiFePO₄. Electrons and lithium ions are withdrawn from it. And the CV shows steady-state like curve. During inverse process, analogue process occurs. The limiting currents are 1.9 mA/cm² for charging and 0.7 mA/cm² for discharging. In comparison, LiFePO₄ electrode sheet without p-type redox active compound is almost inactive as shown in FIG.3A.

### EXAMPLE 2

LiFePO₄ powder with particle size distribution of 200~700nm was mixed with PVDF and acetylene black in weight ratio of 95:5. A 1.0cm×1.0cm electrode sheet comprising 10µm thick same was used as working electrode, with lithium foil as counter and reference electrodes for electrochemical test. The three electrodes were separated to three compartments by glass frits and filled with EC+DMC (1:1)/1M LiPF₆ electrolyte. In the LiFePO₄ electrode compartment, 0.032 M Os(mobpy)₃Cl₂ and Os(mbpy)₃Cl₂ was dissolved therein. The volume of electrolyte in cathodic compartment is 30 µl.
FIG.3B shows the CV of the electrode system at different scan rates. The finite length diffusion of the compound within the electrode film renders the limiting current being independent of the scan rates. As the potential is higher than 3.55V (vs.Li+/Li), both Os complexes are oxidized at current collector. Charges (holes) are transported from the current collector to LiFePO₄ by the diffusion of the oxidized Os(mbpy)₃Cl₂. Since its potential is higher than that of LiFePO₄, the oxidized Os(mbpy)₃Cl₂ is reduced by LiFePO₄. Electrons and lithium ions will be withdrawn from it as illustrated in FIG.2B. And it shows steady-state like curve. During inverse process, as the potential is lower than 3.3V, both complexes are reduced at current collector. Charges (electrons) are transported from the current collector to LiFePO₄ by the diffusion of the oxidized Os(mobpy)₃Cl₂. Since its potential is lower than that of LiFePO₄, the reduced Os(mobpy)₃Cl₂ is oxidized by LiFePO₄. Electrons and lithium ions will be injected into it.

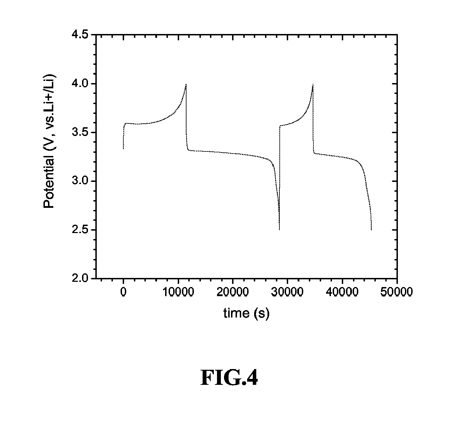

FIG.4 shows the voltage profiles of the cell at a constant current of 0.03 mA. The charging/discharging voltage plateaus show that the concept is working well.

## Claims

1. A rechargeable electrochemical cell with improved energy density, comprising cathodic or anodic lithium insertion materials with p- or n-type redox active compounds, said electrochemical cell comprising two compartments separated by a separating element, the first compartment containing cathodic lithium insertion material and p-type redox active compounds dissolved in an electrolyte and/or the second compartment containing anodic lithium insertion material and n-type redox active compound dissolved in an electrolyte, said separating element being permeable for lithium ions and impermeable for said p- or n-type redox active compounds.

2. A rechargeable electrochemical cell according to claim 1 wherein :
(a) The first oxidation potential of the p-type redox active compound matches at least the cathodic lithium insertion material, the cathodic electrode comprising cathodic lithium insertion material, binder, conductive additives.
(b) The first reduction potential of the n-type redox active compound matches at least the anodic lithium insertion material, the anodic electrode comprising anodic lithium insertion material, binder, conductive additives.

3. The rechargeable electrochemical cell according to claim 2, wherein the nano- or submicrometer sized cathodic lithium insertion material is selected from doped or non-doped oxides LiMO₂ where M is one or more elements selected from M=Co, Ni, Mn, Fe, W, V, LiV₃O₈ and mix of them; phosphor-olivines as LiMPO₄ where M is one or more elements selected from with M= Fe, Co, Mn, Ni, VO, Cr and mix of them and spinels and mixed spinels as LiₓMn₂O₄ or Li₂CoₓFe_{y}Mn_{z}O₈, etc.

4. The rechargeable electrochemical cell according to claim 2, wherein the nano- or submicrometer sized anodic lithium insertion material is selected from carbon, TiO₂, Li₄Ti₅O₁₂, SnO₂, SnO, Si, etc.

5. The rechargeable electrochemical cell according to claim 2, wherein the particle size of the lithium insertion materials ranges from 10nm to 10µm.

6. The rechargeable electrochemical cell according to claim 2, wherein the p-type redox active compound is selected from scheme 1 to 3 compounds.

7. The rechargeable electrochemical cell according to claim 2, wherein the n-type redox active compound is selected from scheme 3 to 5 compounds.

8. The rechargeable electrochemical cell according to claim 2, wherein the separating element is Lithium Phosphorus Oxynitride (LiPON) or 70Li₂S·30P₂S₅, or a ceramic ultrafiltration membrane whose pore radius is selected such that it is impermeable to the redox active compound but permeable to the smaller lithium ions, or a perforated polymer membrane made whose pores have again a specific size to allow passage of lithium ions but to prevent the permeation of the redox active compound.
